# EUROPÄISCHE PATENTSCHRIFT

(11) **EP 0 902 860 B1**
(45) Veröffentlichungstag und Bekanntmachung des Hinweises auf die Patenterteilung: **30.01.2002**
(21) Anmeldenummer: 97925885.2
(22) Anmeldetag: 30.05.1997
(51) Int. Cl.: F01D 15/10, F02C 7/047

(54) **VERFAHREN UND VORRICHTUNG ZUR ANSAUGLUFTVORWÄRMUNG DURCH ABWÄRMEN BEI KRAFTMASCHINEN**
PROCESS AND DEVICE FOR PREHEATING SUCTION AIR BY WASTE HEAT IN POWER ENGINES
PROCEDE ET DISPOSITIF POUR LE PRECHAUFFAGE DE L'AIR D'ASPIRATION PAR LA CHALEUR PERDUE DANS DES MACHINES MOTRICES DE PUISSANCE

(30) Priorität: 31.05.1996 DE 19622057
(43) Veröffentlichungstag der Anmeldung: 24.03.1999
(73) Patentinhaber: Energieversorgung Halle GmbH, 06112 Halle (DE)
(72) Erfinder: JUNGSCH, Wolfgang, D-06193 Sennewitz (DE); WEBER, Ralf, D-06108 Halle (DE)
(74) Vertreter: Söffge, Karen
(86) Internationale Anmeldenummer: DE9701090
(87) Internationale Veröffentlichungsnummer: WO9746796

(56) Entgegenhaltungen:
- DE-A- 1 601 602
- DE-A- 1 751 613
- DE-A- 4 337 674
- DE-C- 865 842
- FR-A- 2 552 816
- GB-A- 592 091
- US-A- 2 508 397
- US-A- 4 328 666
- US-A- 4 561 245
- PATENT ABSTRACTS OF JAPAN vol. 009, no. 268 (M-424), 25.Oktober 1985 & JP 60 113034 A (HITACHI SEISAKUSHO KK), 19.Juni 1985,

## Beschreibung

Die vorliegende Erfindung befaßt sich mit einem Verfahren und einer Vorrichtung zur effektiven Nutzung von Abwärmen bei Leistungs-Kraftmaschinen, insbesondere mit einem Gefrierschutz-System zur Verhinderung von Eisbildung in den Luftansaugeinrichtungen einer energetischen Gasturbine.

Derartige Gefrierschutzeinrichtungen von energetischen Gasturbinen sind im Stand der Technik wohlbekannt. In der US-A-2 508 397 wird ein Gasturbinen-Generator-System gezeigt, bei dem Umgebungsluft dem Generator in Abhängigkeit von der Generatorbelastung dem Generatorkühlsystem zugeführt und abgeführt wird. Die dabei erwärmte Luft wird dann durch die Abgasleitung ins Freie geführt.

Der DE-A-1 601 602 ist eine Einrichtung zur Vorwärmung der Ansaugluft einer Gasturbine zu entnehmen, bei der ein erwärmter Teilstrom dem Abgaskamin entnommen wird, um damit durch Vermischung die Ansaugluft für die Gasturbine zu erwärmen.

Eine vom Prinzip her ähnliche Anti-Eisbildungsanlage ist aus der US-A-4 328 666 bekannt. Bei dieser Anlage werden die erwärmten Abgase der Turbine einem Wärmetauscher zugeführt, der eine bestimmte Menge an Umgebungsluft erwärmt und diese dem Luftansaugsystem zuführt, wodurch die Ansaugluft mit der erwärmten Luft aus dem Wärmetauscher so vermischt wird, daß die Gesamttemperatur der Ansaugluft auf einem angehobenen Temperaturniveau bleibt.

Bei einem anderen bekannten Gefrierschutz-System zur Vermeidung von Vereisungen und Unterkühlungen im Tubinenarbeitsluftansaug- und Filtersystem sowie im Generatorkühlsystem wird ein Teilluftstrom nach einem Verdichter entnommen, der zur Versorgung der Brennkammer für die Turbine dient. Dieser entnommene Teilluftstrom bewirkt eine Leistungsminderung, die sowohl durch die Erhöhung der Ansaugtemperatur als auch durch die nicht unwesentliche Luftentnahme am Ende des Verdichters verursacht wird. Dies wirkt sich selbstverständlich nachteilig auf die Gesamtenergiebilanz des Betriebssystems zur Erzeugung der entsprechenden Energieform aus.

Im allgemeinen wird die Energie erzeugende Leistungsmaschine (Generator) durch eine Gasturbine angetrieben, wobei der Verdichter, die Brennkammer und die Turbine in einem gemeinsamen Gehäuse untergebracht sind. Die Arbeitsmaschine, hier eine Gasturbine, benötigt als Arbeitsmedium große Mengen Außenluft, die einer Filterung unterzogen werden muß. Die Leistungsmaschine, hier ein Generator, erwärmt sich im Laufe des Betriebes erheblich und ist deshalb mit Hilfe eines besonderen GasKühlsystems zu kühlen. Als Gas wird in der Regel Außenluft herangezogen, wobei sich dabei das Problem ergibt, daß bei bestimmten, zu niedrigen Außentemperaturen und zu hoher relativer Luftfeuchtigkeit sich Eis im gesamten Luftansaugsystem bilden kann, das zu erheblichen schädlichen Auswirkungen im Betriebssystem führen kann. Um diese Eisbildungen zu verhindern, wird im Stand der Technik bei zunehmendem Wärmebedarf, d.h. bei sinkenden Außentemperaturen, am Ende des Verdichters warme Luft über ein bestimmtes Regelventil entnommen und der Lufteintrittseinrichtung wieder zugeführt. Durch diese Maßnahme kann die Temperatur im Lufteintrittsbereich des Luftansaugsystems zwischen rund 3°C und 5°C gehalten werden. Dabei beträgt die dem Verdichter entnommene Gasmenge ca. 5 kg/s bei einer Temperatur von 400°C. Somit steht der Gasturbine weniger Arbeitsluft zur Verfügung, wodurch letztlich die elektrische Klemmenleistung am Generator vermindert wird.

Da diese Leistungseinbußen nicht unerheblich sind, ist es Ziel der vorliegenden Erfindung, die Leistungseinbußen infolge des Einsatzes von Gefrierschutzeinrichtungen zumindest zu minimieren.

Daher ist es Aufgabe der vorliegenden Erfindung, ein Verfahren und eine Vorrichtung bereitzustellen, die bei wachsendem Wärmebedarf im Gefrierschutzsystem von Gasturbinen-Anlagen die Verluste der Nutzleistung der Leistungsmaschine minimieren.

Diese Aufgabe wird erfindungsgemäß durch die kennzeichnenden Merkmale der Hauptansprüche gelöst.

Das erfindungsgemäße Verfahren zur Verhinderung von Eisbildung in Gasgemisch-Leitungssystemen, vorzugsweise in Gasturbinen-Generator-Systemen, unter Entnahme bereits erwärmten Gases an bestimmten Stellen im Betriebssystem ist dadurch gekennzeichnet, daß bei Eintritt eines vorgegebenen Sollwerts der Außenlufttemperatur (Tₐ) und der relativen Luftfeuchtigkeit (Wᵣₑₗ) erwärmte Generatorabluft der Luftansaugeinrichtung zugeführt wird. Daher ist das Mischverhältnis von Generatorabluft zur Außenluft und zum Abhitzegas so eingestellt, daß die maximale Luftfeuchtigkeit bezogen auf die Temperatur (Tₐ) der Außenluft in der Ansaugleitung nicht überschritten wird.

Die nach dem erfindungsgemäßen Verfahren arbeitende Vorrichtung zur Verhinderung von Eisbildung in Gasgemisch-Leitungssystemen, vorzugsweise in Gasturbinen-Generator-Systemen, unter Entnahme bereits erwärmten Gases an wärmeerzeugenden Stellen im Betriebssystem ist dadurch gekennzeichnet, daß die Abluftleitung der erwärmten Abluft des Generators mit einer regelbaren Mehrwege-Gasleiteinrichtung verbunden ist, die so geschaltet werden kann, daß die erwärmte Abluft des Generators der Luftansaugeinrichtung zugeführt wird.

Eine vorteilhafte Reihenfolge der Wärmeentnahme bereits erwärmter Luft im Betriebssystem ist die, daß zunächst die erwärmte Generatorabluft, die aus der Leistungsmaschine austritt, der Luftansaugeinrichtung zugeführt wird und bei weiter steigendem Wärmebedarf dann die Wärme der Abhitzeeinrichtung am Ende des Wärmekreislaufs des Betriebssystems entnommen wird und als weitere Möglichkeit die Wärme der Gas-Verdichtereinrichtung entnommen wird. Eine vorteilhafte geeignete Entnahmestelle der Wärme aus der Abhitzeeinrichtung ist diejenige, an der die Gastemperatur zwischen 120°C und 200°C liegt. Ferner ist es vorteilhaft, die Wärme aus der Abhitzeeinrichtung hinter den Wärmetauschern des nachgeschalteten Prozesses zu entnehmen, jedoch bei ausreichend hohem Temperaturniveau.

Vorteilhaft ist es auch, die erwärmte Generatorluft über eine Mehrwege-Gasleiteinrichtung zu führen, wobei die Mehrwege-Gasleiteinrichtung in der Regel eine Dreiwege-Regelklappe ist.

Ebenfalls vorteilhaft ist es, die Wärme der Abhitzeeinrichtung über eine Regeleinrichtung zu führen, so daß der zu entnehmende Wärmebedarf gemäß einer bestimmten Vorschrift geregelt werden kann.

Bei weiter steigendem Wärmebedarf, bzw. bei Versagen der ersten beiden Teilsysteme bzw. bei besonderen Betriebsfällen ist am Ende des Verdichters eine bestimmte Wärmemenge zu entnehmen, damit die Betriebstemperatur zur Vermeidung von Eisbildung in dem Luftansaugsystem von 3°C bis 5°C gehalten wird.

Die den einzelnen Wärmeinrichtungen zu entnehmende Wärme ist nach einer bestimmten Funktions-Vorschrift zu bestimmen. Ein vorteilhaftes Mischungsverhältnis von Generatorabluft zu Abhitzegas zu Außenluft ist dann gegeben, wenn an den Gefährdungspunkten im Luftansaugsystem die relative Luftfeuchtigkeit ihren Maximalwert nicht erreicht. Bei der Bestimmung des optimalen Mischungsverhältnisses der einzelnen Gasströme sind vorteilhaft und erfindungsgemäß verschiedene Parameter, wie beispielsweise die Außenlufttemperatur (Tₐ) und die relative Luftfeuchtigkeit (Wᵣₑₗ) für die weiteren Berechnungen maßgeblich. Diese genannten Parameter sind selbstverständlich nur beispielhaft genannte Parameter und werden durch eine Vielzahl weiterer wichtiger und notwendiger Parameter in der Bestimmungsfunktion ergänzt.

Die vorteilhafte Regulierung der Gasströme in den einzelnen Wärmezuleitungen wird mit gewissen Stellgliedern wie Regelventilen und Luftklappen geregelt.

Weitere vorteilhafte und erfindungsgemäße Merkmale sind den Unteransprüchen zu entnehmen.

Im nun folgenden wird die vorliegende Erfindung anhand von Zeichnungen im Detail näher erläutert. Es zeigt:
- Fig. 1: das in einem Blockschaltbild im Stand der Technik betriebene Betriebssystem (1) mit einem Generator (2) und einer Turbine (5), bei dem der steigende Wärmebedarf für das Gefrierschutzsystem dem Verdichter (3) entnommen wird;
- Fig. 2: das Blockschaltbild eines erfindungsgemäßen Betriebssystems (1), bei dem der zunehmende Wärmebedarf verschiedenen Wärmequellen des Betriebssystems (1) entnommen wird.

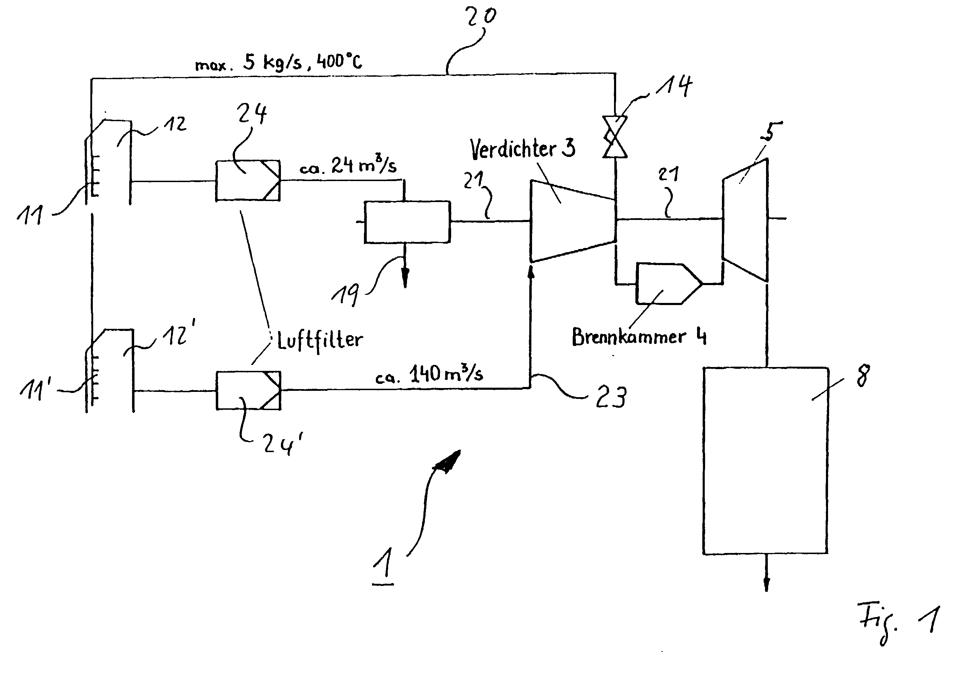

In Fig. 1 ist in einem Blockschaltbild das Betriebssystem 1 einer im Stand der Technik üblichen Gasturbinenanlage gezeigt. Der Generator 2, der Verdichter 3 und die Turbine 5 sind auf einer gemeinsamen Welle 21 gelagert. Das hier nicht näher beschriebene gemeinsame Gehäuse für den Verdichter 3 und die Gasturbine 5 besteht aus zwei Gehäuseabschnitten zwischen vorderem Lagerbock und Turbinenaustrittsgehäuse. Der Verdichter 3 erhält die benötigte Luftmenge aus dem Luftleitsystem aus der Leitung 23. Die benötigte Luftmenge gelangt über die Lufteintrittseinrichtung 12' und einen Luftfilter 24 mit ca. 140 m³/s in den Verdichter 3. Bei einer Außentemperatur von +5°C bis-5°C und einer relativen Luftfeuchtigkeit von >70% soll die Temperatur der Luft in der Leitung 23 ca. 3°C betrage, wobei die dortige Luftfeuchtigkeit <95% sein sollte. die Luftleiteinrichtung besteht im wesentlichen aus einem Luftansaugschacht 12, 12' und einer Vielzahl von Luftdüsen 11, 11', die bei steigendem Wärmebedarf im Luftansaugsystem der Anlage Warmluft in die Luftansaugschächte 12, 12' blasen, um die Temperatur gegebenenfalls anzuheben, um an den Luftfiltern 24, 24' eine Eisbildung zu verhindern.

Die verdichtete Luft bzw. das verdichtete Gas im Verdichter 3 wird der Brennkammer 4 zugeführt, in der die brennbaren Gase verbrannt werden und mit der frei werdenden Energie die Turbine 5 antreiben. Da die Turbine 5 und der Generator 2 auf einer Welle befestigt sind, wird somit die Klemmleistung des Generators maßgeblich durch die Leistung der Turbine 5 bestimmt bzw. beeinflußt. Die aus der Turbine 5 austretende Wärme wird hernach einer sogenannten Abhitzeeinrichtung 8 zugeführt. Im vorliegenden Falle ist die Abhitzeeinrichtung 8 ein zweistufiger Dampferzeuger mit einem Kondensatvorwärmer und einem weiteren Wärmetauscher, in dem eine Vielzahl von Rohrschlangen untergebracht sind. Die verbleibende Restwärme nach der Abhitzeeinrichtung 8 wird wieder an die Atmosphäre abgegeben.

Die Gefrierschutzeinrichtung muß in der Regel bei Außentemperaturen von -5 bis +5°C einsetzen, um Vereisungen innerhalb des Systems zu vermeiden. Dazu wird am Ende 13 des Verdichters 3 über ein Regelventil 14 dem Verdichter 3 ein Teilluftstrom entzogen und über eine Leitung 20 der Lufteintrittseinrichtung 12, 12' über die Düsen 11, 11' zugeführt. Die entnommene erwärmte verdichtete Gasmenge am Ende 13 des Verdichters 3 beträgt maximal 5 kg/s bei einer Temperatur von 400°C. Dies führt bei einer mittleren Betriebszeit von ca. 1.400 Stunden jährlich zu einer Verringerung des Gasturbinen-Wirkungsgrades, so daß die mögliche elektrische Arbeit während dieser Zeit um ca. 7.000 MWh vermindert wird und ein Mehrverbrauch von ca. 250.000 m³ Erdgas verursacht wird, wobei der Einfluß des hohen Anteils an Kondensationsarbeit zum Ausgleich des oben genannten Arbeitsverlustes in der Heizperiode nicht mit einbezogen wurde.

Wegen der hohen Wärmeentwicklung während der Energieerzeugung des Generators 2 ist es notwendig, die Wicklungen und den gesamten Generator mit einem Gas bzw. mit verhältnismäßig trockener Luft zu kühlen. Dies geschieht mit einem Luftstrom von ca. 24 m³/s. Die benötigte Kühlluft gelangt über die Lufteintrittseinrichtung 12 und den Filter 24 in den Generator 2. Im Generator wird die Luft auf ca. 50°C erwärmt und anschließend an die Atmosphäre abgegeben.

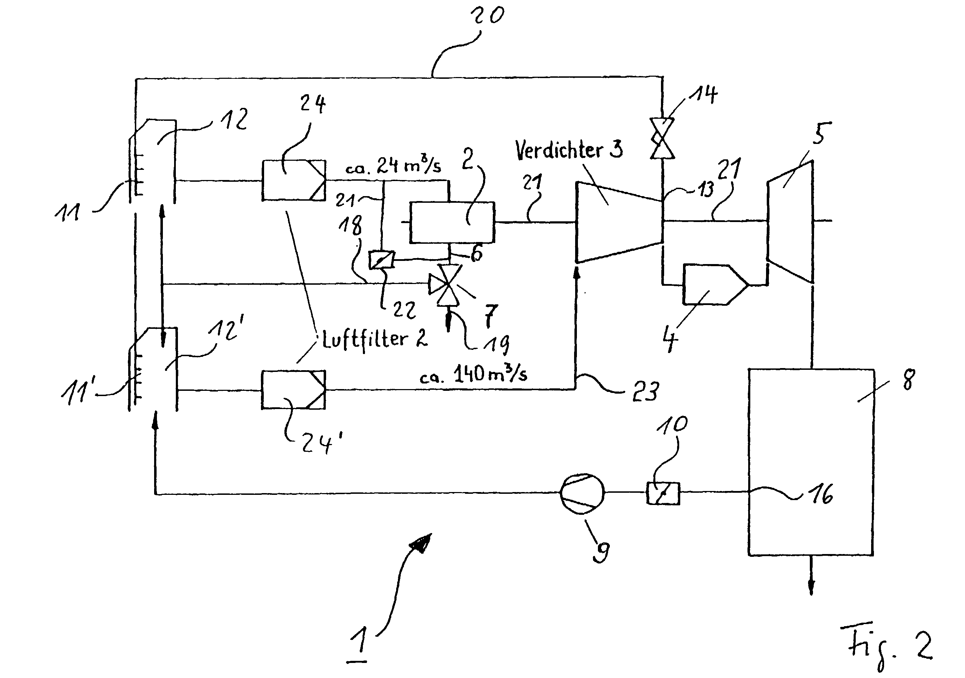

In Fig. 2 ist in einem Blockschaltbild das Betriebssystem 1 mit dem erfindungsgemäßen Luftleitsystem dargestellt. Die Funktionen, die den Betrieb der Gasturbine 5 und den damit verbundenen Betrieb des Verdichters 3 sowie den Betrieb des Generators 2 betreffen sind prinzipiell dieselben wie die aus dem Blockschaltbild in Fig. 1 und werden daher an dieser Stelle nicht weiter erläutert.

Die Gefrierschutzeinrichtung wird, wie bereits oben beschrieben, in Betrieb genommen, wenn die Außentemperatur kleiner als +3°C wird. Dieses ist in den Wintermonaten mit wenigen Ausnahmen die Regel. Erfindungsgemäß wird bei steigendem Wärmebedarf im Luftleitsystem der gesamten Anlage des Betriebssystems 1 die erwärmte Abluft des Generators 2 über eine Dreiwegeklappe 7 geleitet, das mit Hilfe von hier nicht gezeigten Stellgliedern die Luftmengen den entsprechenden Leitungen 18, 19 zuteilt. Die Leitung 19 führt in die Atmosphäre, während die Leitung 18 das erwärmte Gas aus dem Generator 2 zurück in die Luftansaugschächte der Lufteintrittseinrichtung 12, 12' führt, wodurch sich die dort befindliche Luft erwärmt. Die Größe der einzuleitenden erwärmten Luftmenge wird von einer erfindungsgemäßen Funktion bestimmt, die online bestimmte aufgenommene Meßdaten und Parameter auswertet. Bei weiter steigendem Wärmebedarf, d.h. bei weiter sinkenden Außenlufttemperaturen, reicht die Wärmemenge aus der Generatorabluft nicht mehr aus, um eine gefährliche. Eisbildung im Luftkühlsystem zu verhindern. Um den Mehrbedarf an Wärme auszugleichen wird nunmehr erfindungsgemäß der Abhitzeeinrichtung 8 an einer geeigneten Stelle 16 entnommen, die nach dem Kondensatvorwärmer 17 angeordnet ist. Diese geeignete Stelle ist bei einem Temperaturpotential zu wählen, das das Ausscheiden von Feuchte im Ansaugtrakt ausschließt. Ferner ist die geeignete Stelle so zu wählen, daß die Kesseldampfproduktion nicht beeinträchtigt wird. Die Menge des Luftstromes und die damit verbundene Menge der Wärme, die der Abhitzeeinrichtung 8 entnommen werden muß, wird wiederum von der Steuerfunktion bestimmt, die die Auswertung der aufgenommenen Parameter bzw. Meßdaten auswertet. Die Regeleinrichtung 9, 10 steuert die benötigte Luftmenge aus der Abhitzeeinrichtung 8, wobei ein Klappenventil 10 und ein Gebläse 9 in der Leitung 26 in Reihe geschaltet sind.

Die erfindungsgemäße Steuerfunktion muß neben der Mehrfachmessung von Außentemperatur (Tₐ) und relativer Luftfeuchtigkeit (Wᵣₑₗ) an bestimmten Referenzpunkten Messungen mit größter Abweichung von Mittelwerten berücksichtigen, wobei die Berechnung des Maximalwertes der Luftfeuchtigkeit im Ansaugkanal 23 eine entscheidende Rolle spielt. Bei Erreichen der Endlage der Klappen der Generatorluftrückführung wird Teilsystem bei 100% Öffnung belassen und eine weitere Erhöhung der Aufheizspanne durch Drehzahländerung des Rauchgasrückführgebläses 9 erreicht. Ein weiterer wichtiger Parameter wird der Rechenfunktion aus der Stellung des Vorleitapparates 10 und der Gasmenge des rückgeführten Rauchgases zugeführt. Diese Menge ist so zu begrenzen, daß keine überschüssige Feuchte in der gemischten Ansaugluft entsteht. Bei hohen CO-Werten wird das System gesperrt.

Als übergeordnete, zuletzt eingreifende Reserve wird im Bedarfsfalle dem Verdichter 3 über die Leitung 20 und das Regelventil 14 eine Wärmemenge entnommen und der Lufteintrittseinrichtung 12, 12' zugeführt.

Das hier beschriebene erfindungsgemäße Verfahren bzw. die dazu dienende erfindungsgemäße Vorrichtung hat Allgemeingültigkeit und ist für sämtliche Maschinen und Einrichtungen, die nach diesem Prinzip arbeiten, zu verwenden.

## Patentansprüche

1. Verfahren zur Verhinderung von Eisbildung in Gasgemisch-Leitungssystemen, vorzugsweise in Gasturbinen-Generator-Systemen, unter Entnahme bereits erwärmten Gases an bestimmten Stellen im Betriebssystem (1), **dadurch gekennzeichnet, daß** bei Eintritt eines vorgegebenen Sollwertes der Außenlufttemperatur (Ta) und der realtiven Luftfeuchtigkeit (Wrel) erwärmte Generatorabluft der Luftansaugeinrichtung (12, 12') zugeführt wird

2. Verfahren zur Verhinderung von Eisbildung in Gasgemisch-Leitungssystemen, vorzugsweise in Gasturbinen-Generator-Systemen, unter Entnahme bereits erwärmten Gases an bestimmten Stellen im Betriebssystem, **dadurch gekennzeichnet, daß** das Mischverhältnis von Generatorabluft zur Außenluft und zum Abhitzegas so eingestellt wird, daß die maximale Luftfeuchtigkeit bezogen auf die Temperatur (Ta) der Außenluft in der Ansaugleitung (23) nicht überschritten wird.

3. Verfahren nach Anspruch 1, **dadurch gekennzeichnet,**
a. zunächst die erwärmte Generatorabluft der Luftansaugeinrichtung (12, 12') zugeführt wird;
b. bei weiter steigendem Wärmebedarf Wärme der Abhitzeeinrichtung (8) am Ende des Wärmekreislaufs des Betriebssystems (1) entnommen wird;
c. bei weiterhin steigendem Wärmebedarf Wärme der Gas-Verdichtereinrichtung (3) an geeigneter Stelle entnommen wird.

4. Verfahren nach einem der vorangegangenen Ansprüche, **dadurch gekennzeichnet, daß** die den Einrichtungen (2, 7, 3) entnommene Wärme der Lufteintrittseinrichtung (12, 12') geregelt zugeführt wird.

5. Verfahren nach einem der vorangegangenen Ansprüche, **dadurch gekennzeichnet, daß** die Wärme der Abhitzeeinrichtung (8) an der Stelle entnommen wird, an der die Gastemperatur zwischen 120°C und 200°C liegt.

6. Verfahren nach Anspruch 1 und 5, **dadurch gekennzeichnet, daß** die Wärmeentnahmestelle (16) an der Abhitzeeinrichtung (8) nach dem Kondensatvorwärmer (17) angeordnet ist.

7. Verfahren einem der vorangegangenen Ansprüche, **dadurch gekennzeichnet, daß** die zu entnehmende Wärmemenge aus der Abhitzeeinrichtung (8) einen bestimmten Wert nicht überschreitet.

8. Verfahren nach einem der vorangegangenen Ansprüche, **dadurch gekennzeichnet, daß** das Mischverhältnis der einzelnen Gasströme so eingestellt wird, daß die Temperatur in den Lufteintrittseinrichtungen (12, 12') zwischen +3°C und +5°C und die maximale Luftfeuchtigkeit nicht überschritten wird.

9. Vorrichtung zur Verhinderung von Eisbildung in Gasgemisch-Leitungssystemen, vorzugsweise in Gasturbinen-Generator-Systemen, unter Entnahme bereits erwärmten Gases an wärmeerzeugenden Stellen im Betriebssystem (1), **dadurch gekennzeichnet, daß** die Abluftleitung (6) der erwärmten Abluft des Generators (2) mit einer regelbaren Mehrwege-Gasleiteinrichtung (7) verbunden ist, die so geschaltet werden kann, daß die erwärmte Abluft des Generators (2) der Luftansaugeinrichtung (12, 12') zugeführt wird.

10. Vorrichtung nach Anspruch 9, **gekennzeichnet durch**
- eine Mehrwege-Gasleiteinrichtung (7), die die Gasströme verschiedenen Leitungen (18, 19) bedarfsgerecht zuordnet und im Abluftkanal (6) des Kühlsystems der Leistungsmaschine (2) angeordnet ist;
- eine Regeleinrichtung (9, 10) zur Entnahme von Wärme an der Abhitzeeinrichtung (8) des Betriebssystems (1); und
- eine Bypass-Leitung (20) mit einem Regelventil (14) zwischen Gasverdichter-Ausgang (13) und Gaseintrittsöffnung (12) des Ansaugsystems.

11. Vorrichtung nach Anspruch 9 und 10, **gekennzeichnet durch** eine erste Bypassleitung (20) mit einem Regelventil (14).

12. Vorrichtung nach Anspruch 9 und 10, **gekennzeichnet durch** eine zweite Bypassleitung (21) mit einem zweiten Regelventil (22).

13. Vorrichtung nach einem der vorangegangenen Ansprüche, **dadurch gekennzeichnet, daß** die Wärme der Abhitzeeinrichtung (8) über eine Regeleinrichtung (9, 10) geführt wird.

14. Vorrichtung nach einem der vorangegangenen Ansprüche, **dadurch gekennzeichnet, daß** die Wärme am Ende (13) der Gas-Verdichtereinrichtung (3) über ein Regelventil (14) der Lufteintrittseinrichtung (12) zugeführt wird.

## Claims

1. A method of preventing the formation of ice in a gas mixture line-system, preferably in a gas turbine generator-system, comprising withdrawing already heated gas from one defined point in an operating system (1),
**characterized in that**
upon occurrence of a preset nominal value of an external air temperature (Ta) and a relative air humidity (Wrel), supplying the already heated gas to the air intake device (12, 12').

2. A method of preventing the formation of ice in a gas mixture line-system, preferably in a gas turbine generator-system, comprising
withdrawing already heated gas from one defined point in an operating system (1) **characterized in that**
adjusting a mixing ratio of generator heated gas to external air and exhaust heat gas without exceeding a maximal air humidity referred to the temperature (Ta) in the intake line (23).

3. The method according to claim 1 **characterized in that**
a. first supplying the heated gas to first and second air intake devices (12, 12'); and
b. when a heat requirement has increased further, withdrawing required heat from an exhaust heat device (8) at an end of a heat circulation of the operating system (1); and
c. when the heat requirement has increased further, withdrawing required heat from the gas compressor device (3).

4. The process according to any one of the preceding claims, **characterized in that** the heat withdrawn from the systems (2, 7, 3) is supplied to the air inlet system (12, 12') in a controlled way.

5. The process according to any one of the preceding claims, **characterized in that** the heat of the off-heat system (8) is withdrawn in a location where the gas temperature is between 120° C and 200° C.

6. The process according to claim 1 and 5 **characterized in that** the heat withdrawal site (16) is arranged on the off-heat system (8) downstream of the condensate preheater (17).

7. The method according to any one of the preceding claims, **characterized in that** the heat to be withdrawn from the exhaust heat device (8) does not exceed a preset value.

8. The process according to any one of the preceding claims, **characterized in that** the mixing ratio of the individual gas currents is adjusted in such a way that the temperature in the air inlet systems (12, 12') between + 3° C and + 5° C and the maximum air humidity are not exceeded.

9. A device for preventing the formation of ice in a gas mixture line preferably in a gas turbine generator systems using already heated gas from heat generating points in the operating system (1);
**characterized in that**
the off-air line (6) of the heated off-air gas of the generator (2) is connected with a controllable multiway gas conduction device (7), said device (7) being switchable in such a way that the heated off-air is supplied to the air intake device (12, 12').

10. A device according to claim 9, **characterized in that**
- a multiway gas conduction system (7) allocating the gas currents to different conduits (18, 19)
- as required and being arranged in the off-air duct (6) of the cooling system of the power machine (2);
- a controlling system (9, 10) for withdrawing heat on the off-heat system (8) of the operating system (1); and
- a bypass conduit (20) with a control valve (14) between the gas compressor outlet (13) and the gas inlet opening (12) of the intake system.

11. The device according to claim 9 and 10, **characterized by** a first bypass line (20) with a control valve (14).

12. The device according to claim 9 and 10 **characterized by** a second bypass conduit (21) with a second control valve (22).

13. The device according to any one of the preceding claims, in that the heat from the off-heat system (8) is conducted through the controlling system (9, 10).

14. The device according to any one of the preceding claims, **characterized in that**, the heat at the end (13) of the gas compressor system (3) is conducted to the air intake device (12, 12') through a control valve (14).

## Revendications

1. Procédé pour éviter la formation de glace dans les systèmes de conduite de mélanges gazeuses, surtout dans des systèmes de générateurs et de turbines à gaz, en soutirant le gaz déjà chauffé à certaines positions du système fonctionnel (1), **caractérisé par le fait que** l'air d'évacuation du générateur est conduit au dispositif d'aspiration d'air quand une valeur de consigne définie de la température de l'air extérieur (Ta) et de l'humidité relative de l'air (Wrel) est atteinte.

2. Procédé pour éviter la formation de glace dans les systèmes de conduite de mélanges gazeuses, surtout dans des systèmes de générateurs et de turbines à gaz, en soutirant le gaz déjà chauffé à certaines positions du système fonctionnel (1), **caractérisé par le fait que** le rapport de mélange entre l'air d'évacuation du générateur, l'air extérieur et le gaz de chaleur perdue est réglé de façon que l'humidité maximale relative à la température (Ta) de l'air extérieur dans le tube d'aspiration n'est pas dépassée.

3. Procédé selon revendication 1, **caractérisé par le fait que**,
a. l'air d'évacuation chauffé du générateur est conduit d'abord au dispositif d'aspiration d'air (12, 12');
b. si plus de chaleur est nécessaire, la chaleur du dispositif de chaleur perdue situé à la fin du circuit de chaleur du système principal est soutirée;
c. si encore plus de chaleur est nécessaire, la chaleur du dispositif de compression air-gaz est soutirée à une position appropriée

4. Procédé selon une des revendications précédentes, **caractérisé par le fait que** la chaleur soutirée des dispositifs (2, 7, 3) est conduite de façon réglée au dispositif d'entrée d'air (12, 12').

5. Procédé selon une des revendications précédentes, **caractérisé par le fait que** la chaleur du dispositif d'air d'évacuation (8) est soutirée à la position où la température du gaz est d'entre 120°C et 200°C.

6. Procédé selon les revendications 1 et 5, **caractérisé par le fait que** le poste de soutirage de chaleur (16) du dispositif de chaleur perdue (8) est situé après le préchauffeur du condensat (17).

7. Procédé selon une des revendications précédentes, **caractérisé par le fait que** la quantité de chaleur à soutirer du dispositif de chaleur perdue (8) ne dépasse pas une valeur définie.

8. Procédé selon une des revendications précédentes, **caractérisé par le fait que** le rapport de mélange des flux de gaz est réglé de telle façon que la température des dispositifs d'entrée d'air (12, 12') d'entre +3°C et +5°C ainsi que l'humidité d'air maximale ne sont pas dépassées.

9. Dispositif pour éviter la formation de glace dans les systèmes de conduite de mélanges gazeuses, surtout dans des systèmes de générateurs et de turbines à gaz, en soutirant le gaz déjà chauffé aux positions du système principal (1) qui produisent de la chaleur, **caractérisé par le fait que** le tube d'air d'évacuation du générateur (2) est connecté à un dispositif de conduite de gaz à plusieurs voies (7), qui peut être réglé de telle manière que l'air d'évacuation chauffé du générateur (2) est conduit au dispositif d'aspiration d'air (12, 12').

10. Dispositif selon revendication 9, **caractérisé par**
- un dispositif de conduite de gaz à plusieurs voies (7) qui attribue selon le besoin les flux de gaz à des tubes différentes (18, 19) et qui est situé dans le canal d'air d'évacuation (6) du système de refroidissement de la machine de puissance (2);
- un dispositif de réglage (9, 10) pour le soutirage de la chaleur au niveau du dispositif d'air d'évacuation (8) du système principal (1); et
- un by-pass (20) pourvu d'une soupape de réglage entre la sortie du compresseur de gaz (13) et l'orifice d'entrée du gaz (12) dans le système d'aspiration.

11. Dispositif selon revendication 9 et 10, **caractérisé par** un premier by-pass (20) pourvu d'une soupape de réglage (14).

12. Dispositif selon revendication 9 et 10, **caractérisé par** un deuxième by-pass (21) pourvu d'une deuxième soupape de réglage (22).

13. Dispositif selon une des revendications précédentes, **caractérisé par le fait que** la chaleur du dispositif d'air d'évacuation (8) est conduit par un dispositif de réglage (9, 10).

14. Dispositif selon une des revendications précédentes, **caractérisé par le fait que** la chaleur située à la fin (13) du dispositif de compression de gaz (3) est conduit par une soupape de réglage (14) au dispositif d'entrée d'air (12).
